# FASCICULE DE BREVET EUROPEEN

(11) **EP 1 960 264 B1**
(45) Date de publication et mention de la délivrance du brevet: **29.07.2009**
(21) Numéro de dépôt: 06819477.8
(22) Date de dépôt: 14.11.2006
(51) Int. Cl.: B64C 25/14, B64C 1/00

(54) **CASE DE TRAIN A STRUCTURE DISSOCIEE**
FAHRWERKGEHÄUSE MIT EINER GETRENNTEN STRUKTUR
LANDING GEAR CASING PROVIDED WITH A DISSOCIATED STRUCTURE

(30) Priorité: 21.11.2005 FR 0553535
(43) Date de publication de la demande: 27.08.2008
(73) Titulaire: AIRBUS France, 31060 Toulouse Cédex (FR)
(72) Inventeur: DE RUFFRAY, Paul, F-31100 Toulouse (FR); MOREL, Rodolphe, F-31300 Toulouse (FR)
(74) Mandataire: Schmit, Christian Norbert Marie
(86) Numéro de dépôt international: PCT/EP2006/068462
(87) Numéro de publication internationale: WO 2007/057400

(56) Documents cités:
- US-A- 2 667 316
- US-A- 5 692 703

## Description

La présente invention concerne une case de train d'aéronef dont la structure est dissociée entre une partie structurale et une partie de protection de l'espace interne de l'aéronef.

Les cases de train d'aéronef ont pour fonction de recevoir les trains d'atterrissage et de séparer le volume interne de l'avion souvent pressurisé de l'extérieur de l'avion.

Du fait des efforts qu'elles subissent, efforts sol transmis par le train lors de l'atterrissage, efforts de compression dus à la pressurisation interne, et du fait qu'elles doivent recevoir le train en position rentrée, les cases de train de l'art antérieur comportent des cadres de renforts en forme d'arches, prolongeant des éléments de cadres du fuselage, répartis longitudinalement le long de la case et entourant la case de train. Les cadres de renfort raidissent des panneaux de la case de train en sorte de former des panneaux plans raidis.

Ces panneaux de l'art antérieur reçoivent les paliers atterrisseurs et assurent l'étanchéité de la zone de la case de train. Cette construction rend les cases de train volumineuses et massives.

Une solution est décrite dans le document US 5 692 703, qui montre toutes les caractéristiques du préambule de la revendication 1. Selon ce document, des cases de train d'atterrissage sont réalisées entre des poutres principales du fuselage, des parois avant arrière et supérieure formant les parois des cases de train.

La présente invention a pour but de réaliser une case de train de volume réduit, optimisée pour répondre aux deux types de sollicitations, efforts sol et pressurisation, et propose pour ce faire une case de train de volume réduit pour atterrisseur d'aéronef qui comprend un châssis pour assurer la fixation et la reprise des efforts de l'atterrisseur et une structure enveloppe rapportée sur le châssis pour reprendre les efforts de pressurisation.

Plus particulièrement, le châssis comporte un cadre affleurant une ouverture de sortie du train et comprenant des longerons recevant des moyens de maintien de paliers d'attache de l'atterrisseur.

Selon un mode de réalisation particulier de l'invention, le châssis comporte en outre des polygones, de réception de paliers d'attache d'une contrefiche de manoeuvre de l'atterrisseur, fixés sur les longerons, les longerons et les polygones réalisant une structure en treillis.

La solution de la présente invention basée sur une dissociation de la structure reprenant les efforts sol et de la structure reprenant les efforts de pressurisation permet ainsi de mieux adapter ces structures aux types de sollicitations qu'elles doivent supporter et ainsi de réduire la masse et le volume de la case de train.

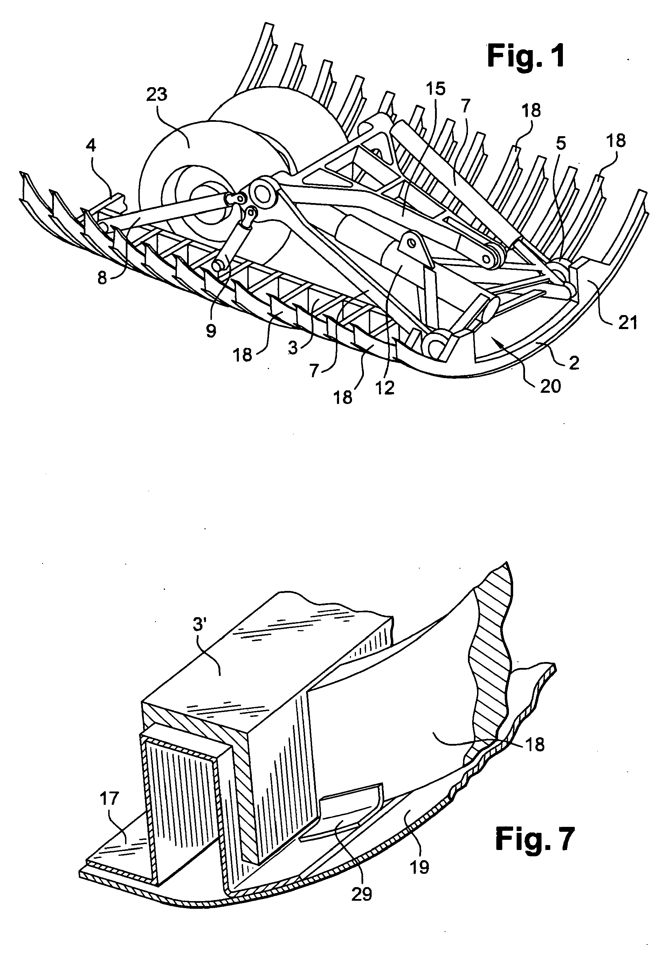

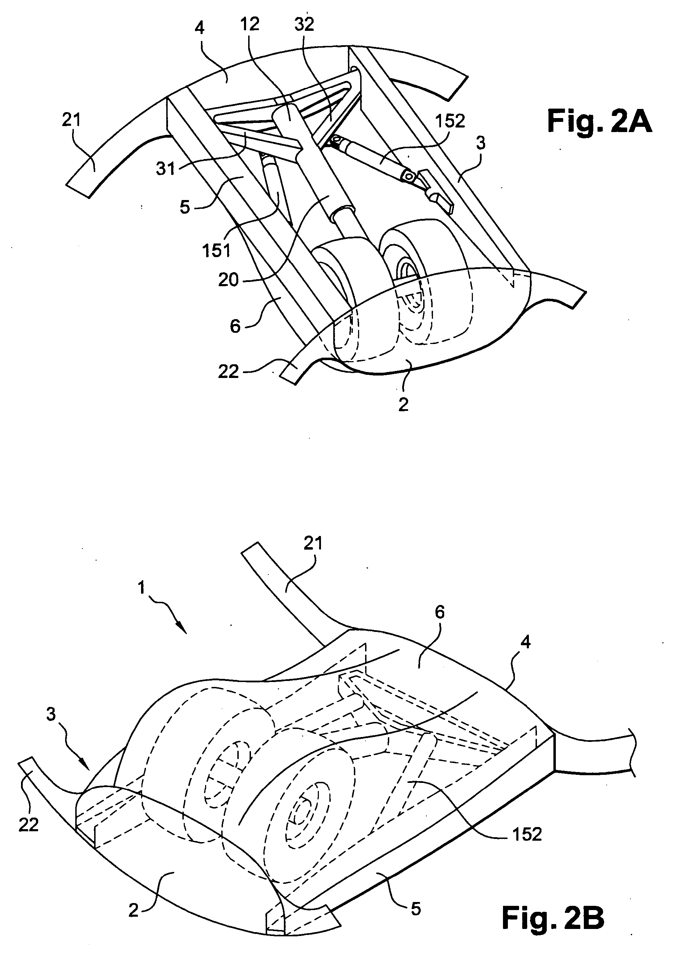

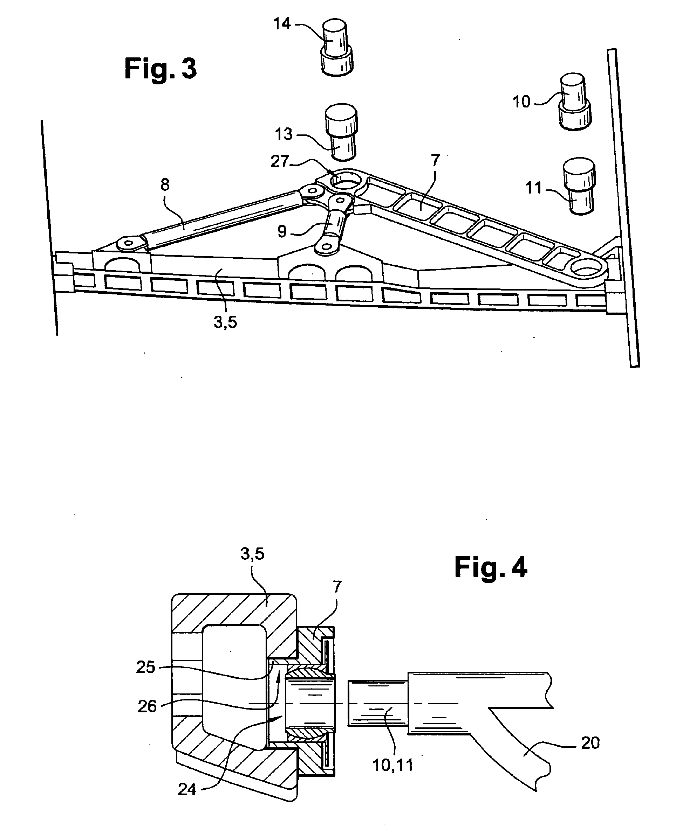

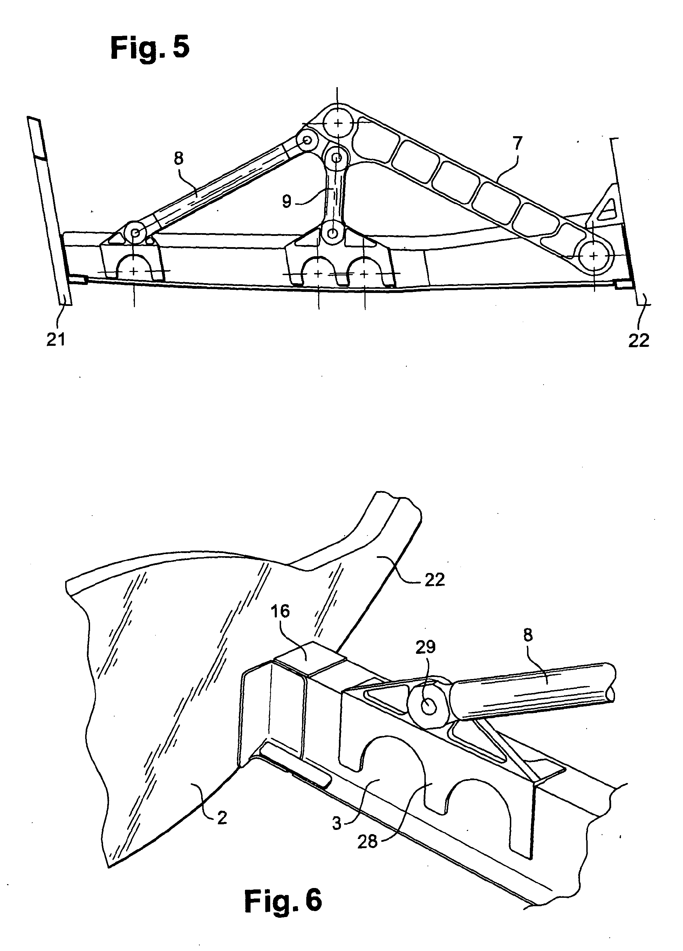

D'autres caractéristiques et avantages de l'invention seront mieux compris à la lecture de la description qui va suivre d'exemples non limitatifs de réalisation de l'invention en référence aux figures qui représentent:
en figure 1: une vue en perspective d'une partie de structure de fuselage comprenant une case de train selon l'invention;
en figures 2A et 2B: des vues en perspective respectivement de dessus et de dessous d'une case de train selon une variante de l'invention;
en figure 3: une vue en perspective d'un longeron de la case de train de la figure 1;
en figure 4: un détail de la fixation d'un palier de l'atterrisseur de la figure 1;
en figure 5: une vue de côté du longeron de la figure 3;
en figure 6: une vue de détail en perspective de la fixation du longeron de la figure 1.
en figure 7: une vue en perspective coupe d'un exemple de réalisation de longeron de case de train selon un mode de réalisation particulier de l'invention.

Sur la figure 1 on a représenté un atterrisseur 20 en position rentré dans le fuselage d'un aéronef. L'atterrisseur est un atterrisseur avant qui comporte des roues 23, une jambe 12 et une contrefiche 15.

Le fuselage, dont la peau n'est pas représentée ici par souci de clarté, est réalisé à partir d'une pluralité de cadres de fuselage 18, 20, 21.

Au niveau de la case de train les cadres 18 de structure du fuselage sont ouverts pour permettre de disposer l'atterrisseur et les éléments de trappe.

L'invention propose de simplifier la réalisation de la case de train en ne prolongeant pas les cadres 18 par des cintres disposés sur le contour de la case de train mais de réaliser la case de train à partir d'un châssis, pour assurer la fixation et la reprise des efforts de l'atterrisseur, et de rapporter sue le châssis une structure enveloppe 6, pour reprendre les efforts de pressurisation.

Le châssis plus particulièrement représenté aux figures 2A et 2B comporte un cadre 2, 3, 4, 5 affleurant une ouverture de sortie du train.

Le cadre comprend des longerons repérés 3, 5 sur la figure 2A, parallèles à l'axe longitudinal de l'aéronef et disposés de part et d'autre du logement de l'atterrisseur 20.

Le cadre comprend en outre des traverses avant et arrière 2, 4 qui, comme on le verra plus loin, sont avantageusement des éléments inférieurs de cadres 21, 22 de fuselage terminant la case de train sur l'avant et sur l'arrière de cette dernière.

Les longerons reçoivent des moyens de maintien de paliers 10, 11 d'attache de l'atterrisseur qui, dans le cas de l'exemple de la figure 1 et des figures 3 à 6, sont des bras 7 de polygones 7, 8, 9 de réception de paliers 13, 14 d'attache d'une contrefiche 15 de manoeuvre de l'atterrisseur.

En effet, selon cet exemple de réalisation, l'atterrisseur est un atterrisseur à contrefiche 15 articulée disposée selon l'axe longitudinal de l'atterrisseur.

Cet atterrisseur comporte un T prolongeant la jambe 12 vers le haut, les extrémités de la branche supérieure du T constituant les paliers 10, 11 de rotation de la jambe 12 pour la rentrée du train.

La contrefiche s'articule sur la jambe 12 et comporte elle même des paliers 13, 14 devant se fixer dans la case de train.

Selon ce mode de réalisation de l'invention, les polygones 7, 8, 9 sont des triangles fixés sur les longerons, les longerons 3, 5 et les polygones 7, 8, 9 réalisant une structure en treillis rigide.

Les polygones sont constitués de bras 7, d'attache de la contrefiche 15, et, d'au moins une bielle 8, 9 de retenue du bras. Selon l'exemple représenté deux bielles sont prévues pour relier le bras 7 au longeron 3, 4 afin de répartir les efforts de traction exercés par la contrefiche sur le longeron au travers du bras.

Les paliers 13, 14 d'attache de la contrefiche 15 sont reçus dans un logement à l'extrémité des bras, au niveau des sommets des polygones distants des longerons.

Ainsi, les paliers de l'atterrisseur et les paliers de la contrefiche sont reçus -respectivement à une première et une seconde extrémités des bras 7, les bras 7 assurant la reprise des efforts au niveau de tous les paliers.

Les paliers 10, 11 de l'atterrisseur sont, comme représenté en figure 4, reçus dans un logement 24 en extrémité du bras 7, cette extrémité étant elle même conformée en flasque 25 reçue dans un logement 26 du longeron 3, 5.

L'extrémité du bras forme ainsi un insert reçu dans le longeron 3, 5.

Les paliers 13, 14 d'attache de la contrefiche sont reçus directement dans un logement 27 réalisé à l'extrémité opposée du bras 7, extrémité sur laquelle sont en outre fixées les bielles 8, 9.

Ainsi les bras 7 qui reçoivent tant les paliers de l'atterrisseur que les paliers de la contrefiche assurent la rigidité de l'équipage mobile constitué par l'atterrisseur muni de sa contrefiche.

Les longerons 3, 5, pour leur part, reprennent les efforts de l'atterrisseur complet.

Le cas de l'exemple des figures 2A et 2B correspond à une variante de réalisation de l'atterrisseur qui comporte deux contrefiches diagonales.

Les contrefiches diagonales sont des contrefiches télescopiques avant 151, 152, raccordées à des barres de renfort 31, 32 de l'atterrisseur et sont pourvues chacune d'un palier 13, 14, les paliers de ces contrefiches diagonales sont comme les paliers de l'atterrisseur reçus dans les caissons latéraux 3, 5.

Selon ce mode de réalisation, les paliers de l'atterrisseur et les premières extrémités des contrefiches diagonales sont repris directement sur les longerons 3,5.

Selon les exemples de réalisation de l'invention, le châssis comporte des traverses extrêmes 2, 4 constituées par des segments inférieurs des cadres de structure du fuselage formant la paroi avant et la paroi arrière de la case de train 1. Ainsi, les longerons sont repris directement sur ces cadres ce qui accroît la rigidité de la case de train sans nécessiter d'ajouter des cintres intermédiaires reliant les longerons.

En mode de réalisation particulier représenté en figure 6, les longerons 3, 3', 5 sont raccordés aux dits cadres 21, 22 par des ferrures d'équerrage 16 qui permettent une fixation rigide des longerons.

Cette figure 6 permet en outre de mieux distinguer la fixation des bielles 8 sur les longerons au moyen de ferrures 28 sur lesquelles sont repris des axes 29 de fixation des bielles 8, 9.

Selon le mode de réalisation de la figure 4 les longerons 3, 5 sont en forme de C mais il est aussi possible de réaliser les longerons avec un profil eu U retourné de sorte qu'ils reçoivent, dans leur section creuse, des cornières 17 de raccordement des éléments de cadres ouverts 18 de la structure du fuselage disposés au long des côtés longitudinaux de la case de train et venant en appui sur les longerons 3, 5.

La figure 7 représente un détail d'une telle réalisation pour laquelle le longeron 3', vu en perspective coupe, reçoit la cornière 17 sur laquelle est positionnée la peau 19 du fuselage et est fixé le cadre 18 ouvert.

Le cadre 18 du fuselage est solidarisé à la cornière par une équerre 29.

La case de train selon l'invention comporte en outre une structure enveloppe 6 qui a pour fonction d'isoler l'intérieur de l'aéronef de l'extérieur, et de résister aux efforts de pressurisation.

Pour optimiser la résistance de la case de train aux efforts de pressurisation, d'une part la structure enveloppe comporte un contour épousant le cadre 2, 3, 4, 5 du châssis en partie interne de l'aéronef de sorte que l'enveloppe repose sur le cadre et d'autre part, la structure enveloppe 6 est une structure de surface courbe longitudinalement et transversalement dont la courbure est adaptée pour équilibrer les efforts de pression de pressurisation s'y appliquant.

Une telle structure est mieux adaptée à la reprise de tels efforts que les structures à panneaux plans de l'art antérieur.

En outre, selon l'invention une plus grande liberté de réalisation est donnée pour la structure enveloppe 6 qui ne s'applique plus sur des cintres raidisseurs mais dont le contour inférieur repose sur le cadre du châssis et en épouse le contour supérieur.

L'enveloppe peut ainsi être une structure de profil longitudinal courbe formant un carénage de forme adaptée à épouser l'enveloppe du profil de l'atterrisseur 20 rentré, et être réalisée au plus près des éléments dépassant vers l'intérieur de l'aéronef afin de limiter l'encombrement interne de la case de train et de dégager de la place pour des équipements situés dans le nez de l'appareil lorsque l'atterrisseur concerné est l'atterrisseur avant.

La structure enveloppe peut notamment être réalisée en matériau composite moulé sur une forme correspondant à l'encombrement de l'atterrisseur et calculée pour en outre offrir une bonne résistance aux efforts de pression, la forme résultante pouvant avantageusement être une forme semi-ovoïde sans arêtes ni brisures.

L'invention, qui permet de réaliser une case de train rigide tout en restant de volume et de masse réduits, n'est pas limitée aux exemples représentés et notamment la structure châssis et la structure enveloppe peuvent être utilisées pour d'autres atterrisseurs que l'atterrisseur avant d'un aéronef.

## Revendications

1. Case de train de volume réduit (1) pour atterrisseur (20) d'aéronef comprenant un châssis (2, 3, 3', 4, 5, 7, 8, 9) pour assurer la fixation et la reprise des efforts de l'atterrisseur et une structure enveloppe (6), rapportée sur le châssis, pour reprendre les efforts de pressurisation et **caractérisée en ce que** le châssis comporte un cadre (2, 3, 4, 5) affleurant une ouverture de sortie du train et comprenant des longerons (3, 3', 5) recevant des moyens de maintien de paliers (10, 11) d'attache de l'atterrisseur ainsi que des traverses avant et arrière (2, 4) constituées par des éléments inférieurs de cadres de fuselage (21, 22), lesdits longerons étant repris sur ces cadres de fuselage.

2. Case de train selon la revendication 1 **caractérisée en ce que** lesdits longerons sont raccordés à des cadres ouverts de structure du fuselage.

3. Case de train selon la revendication 1 ou 2 **caractérisé en ce que** le châssis comporte en outre des polygones (7, 8, 9), de réception de paliers d'attache d'une contrefiche de manoeuvre de l'atterrisseur, fixés sur les longerons, les longerons et les polygones réalisant une structure en treillis.

4. Case de train selon la revendication 3 **caractérisé en ce que** les polygones sont constitués d'un bras (7), d'attache de la contrefiche (15) et d'au moins une bielle (8, 9) de retenue du bras, les paliers (13, 14) d'attache de la contrefiche (15) étant reçus au niveau de sommets des polygones distants des longerons.

5. Case de train selon l'une des revendications 1 à 4 **caractérisée en ce que** la structure enveloppe (6) comporte un contour épousant le cadre (2, 3, 4, 5) du châssis en partie interne de l'aéronef.

6. Case de train selon l'une des revendications précédentes **caractérisée en ce que** la structure enveloppe (6) est une structure de profil longitudinal courbe formant un carénage de forme adaptée à épouser l'enveloppe du profil de l'atterrisseur (20) rentré.

7. Case de train selon l'une des revendications précédentes **caractérisée en ce que** la structure enveloppe (6) est une structure de surface courbe longitudinalement et transversalement dont la courbure est adaptée pour équilibrer les efforts de pression de pressurisation s'y appliquant.

8. Case de train selon l'une des revendications précédentes **caractérisée en ce que** le châssis comporte des traverses extrêmes (2, 4) constituées par des cadres (21, 22) de structure du fuselage formant la paroi avant et la paroi arrière de la case de train (1).

9. Case de train selon l'une des revendications précédentes **caractérisée en ce que** les longerons (3, 3', 5) sont raccordés aux dits cadres (21, 22) par des ferrures d'équerrage (16).

10. Case de train selon l'une des revendications précédentes **caractérisée en ce que** les longerons (3') ont un profil eu U recevant dans sa section creuse une cornière (17) de raccordement des éléments de cadres ouverts (18) de structure du fuselage disposés au long des côtés longitudinaux de la case de train.

11. Aéronef équipé d'une case de train selon l'une des revendications précédentes.

## Claims

1. Reduced volume landing gear casing (1) for aircraft landing gear (20) comprising a chassis (2, 3, 3', 4, 5, 7, 8, 9) to ensure the securing and take up or absorption of the landing gear stresses and an envelope structure (6) attached onto the chassis, to take up or absorb the pressurization stresses and **characterized in that** the chassis includes a frame (2, 3, 4, 5) that is flush with an opening for extracting the landing gear and comprising beams (3, 3', 5) receiving means for maintaining bearings (10, 11) for attaching the landing gear together with cross beams (2.4) made up of lower frames (21, 22) of the fuselage, said beams being secured to said frames of the fuselage.

2. Landing gear casing according to claim 1 **characterized in that** said beams are connected to structural open frames of the fuselage.

3. Landing gear casing according to claim 2 **characterized in that** the chassis also includes polygons (7, 8, 9), for receiving bearings of a strut for manoeuvring the landing gear, secured on the beams, with the beams and the polygons forming a lattice structure.

4. Landing gear casing according to claim 3 **characterized in that** the polygons are made up of an arm (7) attaching the strut (15) and at least one rod (8, 9) for holding the arm, with the bearing (13, 14) securing the strut (15) being received at the tops of the polygons separated from the beams.

5. Landing gear casing according to claim 2 **characterized in that** the envelope structure (6) includes a contour that joins the frame (2, 3, 4, 5) of the chassis on the inside of the aircraft.

6. Landing gear casing according to anyone of the previous claims **characterized in that** the envelope structure (6) is a structure with a curved longitudinal profile forming a fairing or shroud with an adapted shape to join the envelope of the profile of the retracted landing gear (20).

7. Landing gear according to anyone of the previous claims **characterized in that** the envelope structure (6) is a structure with a longitudinal and transversal curved surface for which the curvature is adapted to balance the pressurization stresses that are applied onto it.

8. Landing gear casing according to anyone of the previous claims **characterized in that** the chassis includes end cross beams (2.4) made up of frames (21, 22) of the fuselage structure that forms the front wall and the rear wall of the landing gear casing (1).

9. Landing gear casing according to claims 2 and 8 **characterized in that** the beams (3, 3', 5) are connected to said frames (21, 22) by square angle irons (16).

10. Landing gear casing according to claim 2 **characterized in that** the beams (3') are U shaped and receive in its hollow section a corner iron (17) for connecting the elements of the open frames (18) of the fuselage structure situated along the longitudinal sides of the landing gear casing.

11. Aircraft equipped with a landing gear casing according to any one of the previous claims.

## Patentansprüche

1. Fahrgestellkasten (1) mit verringertem Volumen für ein Flugzeugfahrwerk (20), umfassend ein Chassis (2, 3, 3', 4, 5, 7, 8, 9), um die Befestigung und die Aufnahme von Kräften des Fahrwerks zu gewährleisten, und eine Hüllstruktur (6), die an das Chassis angefügt ist, um die Druckbeaufschlagungskräfte aufzunehmen, **dadurch gekennzeichnet, dass** das Chassis einen Rahmen (2, 3, 4, 5) umfasst, der eine Fahrgestellaustrittsöffnung umgibt und Längsträger (3, 3', 5), die Haltemittel für Fahrwerk-Befestigungslager aufnehmen, sowie vordere und hintere Querträger (2, 4), die durch untere Elemente von Rahmen (21, 22) des Rumpfes gebildet sind, umfasst, wobei die Längsträger an diesen Rumpfrahmen aufgenommen sind.

2. Fahrgestellkasten nach Anspruch 1, **dadurch gekennzeichnet, dass** die Längsträger an offene Rahmen der Rumpfstruktur angefügt sind.

3. Fahrgestellkasten nach Anspruch 1 oder 2, **dadurch gekennzeichnet, dass** das Chassis außerdem Polygone (7, 8, 9) für die Aufnahme von Befestigungslagern einer Fahrwerkbetätigungsstrebe, die an den Längsträgern befestigt sind, umfasst, wobei die Längsträger und die Polygone eine Netzwerkstruktur bilden.

4. Fahrgestellkasten nach Anspruch 3, **dadurch gekennzeichnet, dass** die Polygone aus einem Befestigungsarm (7) für die Strebe (15) und aus wenigstens einem Lenker (8, 9) zum Halten des Arms gebildet sind, wobei die Lager (13, 14) für die Befestigung der Strebe (15) auf Höhe der von den Längsträgern entfernten Ecken der Polygone aufgenommen sind.

5. Fahrgestellkasten nach einem der Ansprüche 1 bis 4, **dadurch gekennzeichnet, dass** die Hüllstruktur (6) einen Umriss aufweist, der sich an den Rahmen (2, 3, 4, 5) des Chassis im inneren Teil des Flugzeugs anschmiegt.

6. Fahrgestellkasten nach einem der vorhergehenden Ansprüche, **dadurch gekennzeichnet, dass** die Hüllstruktur (6) eine Struktur mit einem gekrümmten Längsprofil ist, die eine Ausrundung mit einer Form bildet, die geeignet ist, sich an die Hülle des Profils des eingefahrenen Fahrwerks (20) anzuschmiegen.

7. Fahrgestellkasten nach einem der vorhergehenden Ansprüche, **dadurch gekennzeichnet, dass** die Hüllstruktur (6) eine Struktur mit in Längsrichtung und in Querrichtung gekrümmter Oberfläche ist, deren Krümmung dazu ausgelegt ist, die Druckkräfte der Druckbeaufschlagung, die darauf ausgeübt wird, auszugleichen.

8. Fahrgestellkasten nach einem der vorhergehenden Ansprüche, **dadurch gekennzeichnet, dass** das Chassis Endquerträger (2, 4) aufweist, die durch Rahmen (21, 22) der Rumpfstruktur gebildet sind, die die vordere Wand und die hintere Wand des Fahrgestellkastens (1) bilden.

9. Fahrgestellkasten nach einem der vorhergehenden Ansprüche, **dadurch gekennzeichnet, dass** die Längsträger (3, 3', 5) an diese Rahmen (21, 22) durch rechtwinklige Beschläge (16) angefügt sind.

10. Fahrgestellkasten nach einem der vorhergehenden Ansprüche, **dadurch gekennzeichnet, dass** die Längsträger (3') ein U-Profil haben, das in seinem Hohlquerschnitt ein Winkelprofil (17) für die Verbindung von Elementen offener Rahmen (18) der Rumpfstruktur, die längs der longitudinalen Seiten des Fahrgestellkastens angeordnet sind, aufnimmt.

11. Flugzeug, das mit einem Fahrgestellkasten nach einem der vorhergehenden Ansprüche ausgerüstet ist.
